# EUROPEAN PATENT SPECIFICATION

(11) **EP 4 314 902 B1**
(45) Date of publication and mention of the grant of the patent: **08.04.2026**
(21) Application number: 22776222.6
(22) Date of filing: 11.03.2022
(51) Int. Cl.: H01J 49/48, H01J 49/02, G01N 23/2273, G01T 1/169, G01T 1/36, G01T 7/00

(54) **CHARGED PARTICLE SPECTROMETER AND METHOD FOR CALIBRATION**
SPEKTROMETER FÜR GELADENE TEILCHEN UND VERFAHREN ZUR KALIBRIERUNG
SPECTROMÈTRE DE PARTICULES CHARGÉES ET PROCÉDÉ D'ÉTALONNAGE

(30) Priority: 24.03.2021 SE 2150345
(43) Date of publication of application: 07.02.2024
(73) Proprietor: Scienta Omicron AB, 750 15 Uppsala (SE)
(72) Inventor: HASHIMOTO, Takahiro, 753 16 Uppsala (SE); WIELL, Tomas, 752 20 Uppsala (SE)
(74) Representative: Zacco Sweden AB
(86) International application number: PCT/SE2022/050242
(87) International publication number: WO 2022/203566

(56) References cited:
- US-A- 5 285 066
- US-A- 5 285 066
- US-A- 6 104 029
- US-A1- 2009 251 696
- US-A1- 2012 049 060
- US-A1- 2016 336 166
- US-A1- 2020 075 309
- US-A1- 2021 026 026
- US-A1- 2021 033 551
- US-A1- 2021 033 551
- MANNELLA N ET AL: "Correction of non-linearity effects in detectors for electron spectroscopy", JOURNAL OF ELECTRON SPECTROSCOPY AND RELATED PHENOMENA, ELSEVIER SIENCE PUBLISHERS, AMSTERDAM, NL, vol. 141, no. 1, 1 October 2004 (2004-10-01), pages 45 - 59, XP004578943, ISSN: 0368-2048, DOI: 10.1016/J.ELSPEC.2004.03.009
- BARNES J H ET AL: "Recent advances in detector-array technology for mass spectrometry", INTERNATIONAL JOURNAL OF MASS SPECTROMETRY, ELSEVIER SCIENCE PUBLISHERS , AMSTERDAM, NL, vol. 238, no. 1, 15 October 2004 (2004-10-15), pages 33 - 46, XP004593693, ISSN: 1387-3806, DOI: 10.1016/J.IJMS.2004.08.004

## Description

### TECHNICAL FIELD

The present invention relates to a charged particle spectrometer arranged to analyse charged particles, emitted from a sample surface of a particle emitting solid sample. The charged particle spectrometer comprises an electrostatic lens system, a deflection analyser and a multichannel particle detector. The invention also relates to a method for calibration of the multichannel particle detector.

### BACKGROUND ART

The examination of the properties of surfaces has been a research field for a long time. There are a number of different techniques available for the examination of the properties of surfaces. Charged particle spectroscopy is a sensitive method in which charged particles from a surface are analysed with regard to their energy and momentum. The most common type of charged particle spectroscopy is electron spectroscopy in which electrons emitted from a sample are analysed with a charged particle spectrometer. A charged particle spectrometer usually comprises a deflection analyser for analysing the charged particles. The deflection analyser has a first end with an entrance for charged particles, and a second end. The position of the charged particles at the second end is dependent on the magnitude of an electrostatic field applied to the deflection analyser. A common type of deflection analyser is a hemispherical deflection analyser in which the electrostatic field is applied between two hemispheres in the hemispherical deflection analyser. In a hemispherical deflection analyser, the first end and the second end are in the same plane. The charged particle spectrometer also comprises a particle detector for measuring the intensity at different energies and/or momenta. In order to minimize the time for recording the spectra of charged particles it is favourable to use a multichannel particle detector. A common type of multichannel particle detector is an MCP/camera detector, which is the combination of a microchannel plate (MCP), a fluorescent screen, and a digital camera. A problem with MCP/camera detectors and other multichannel particle detectors is that they are not linear in their intensity response.

It is advantageous for a multichannel particle detector to be able to provide linear response. Several prior art systems and methods have been developed which can perform calibration of intensity response of multichannel particle detectors. In "Correction of non-linearity effects in detectors for electron spectroscopy"; N. Mannella et al., J. Electron Spectros. Relat. Phenomena, Vol 141, 45, two different procedures have been described for correcting the non-linearity effects. The first procedure yields directly the detector efficiency by measuring a flat-background reference intensity as a function of incident X-ray flux. However, this calibration is limited to a low count rate because of a weak intensity of a flat background. The second procedure determines the detector response from a least-squares analysis of broadscan survey spectra at different incident X-ray fluxes. However, it takes long time to measure the calibration spectra with several different incident X-ray fluxes, making it not practical in the examination of the properties of surfaces.

In "Effects, determination, and correction of count rate nonlinearity in multi-channel analogue electron detectors", T. J. Reber et al., Rev. Sci. Instrum., Vol. 85, 043907, the calibration was done by assuming linear response of the MCP/camera detectors at low count rate. However, the MCP/camera detectors have non-linear response even at low count rate.

Another option is provided by the published US patent application No. 2021/033551, which describes a charged particle spectrometer that makes use of two trajectories of charged particles, with two entrances of a toroidal analyser and two detectors at the end of the toroidal capacitor type electrostatic energy analyser. The person skilled in the art would consider configuring a multichannel particle detector and a calibration particle detector at each end of the toroidal analyser to calibrate the intensity measured by the multichannel particle detector with the intensity measured with the calibration particle detector, even though not explicitly stated configured for calibration. However, different portions of the charged particles emitted from the sample, different angles and/or positions, for example, travel through the two trajectories to the entrance of the toroidal analyser, which is not appropriate for the calibration of intensity.

### SUMMARY OF THE INVENTION

An objective of the present invention is to provide a charged particle spectrometer with a multichannel particle detector, which is configured for recording energy spectra, which charged particle spectrometer enables a correction of the count rate non-linearity of the multichannel particle detector.

Another object is to provide a method for obtaining an energy spectrum or an energy and momentum spectrum of charged particles with a charged particle spectrometer having a multichannel particle detector, which method enables correction of the count rate nonlinearity of the multichannel particle detector.

At least one of these objects is fulfilled with an angle-resolving photoelectron spectrometer and a method according to the independent claims.

Further advantages are provided with the features of the dependent claims.

According to a first aspect of the present invention a charged particle spectrometer is provided which comprises a deflection analyser having a first end with an entrance for charged particles, and a second end. The position of the charged particles at the second end is dependent on the kinetic energy of the charged particle at the first end and the magnitude of an electrostatic field applied to the deflection analyser. The charged particle spectrometer also comprises a multichannel particle detector arranged at the second end of the deflection analyser wherein the multichannel particle detector has multiple detection channels arranged along a detection line, such that charged particles of different energies are incident on different ones of the plurality of detection channels during operation of the charged particle spectrometer. The multichannel particle detector is configured to output the intensities of the charged particles incident on the different detection channels. The charged particle spectrometer also comprises an electrostatic lens system, which is arranged to transport charged particles from a sample to the entrance of the deflection analyser. The charged particle spectrometer is characterized in that it comprises a calibration particle detector, which is arranged at the second end along the detection line. The calibration particle detector is configured to output the intensity of the charged particles incident on the calibration particle detector. The count rate linearity of the calibration particle detector is better than the count rate linearity of the particle detector. During the operation of the multichannel particle detector and the calibration particle detector the same portions of the particle beams arrive at the entrance at the first end of the deflection analyser because the particle beam travel through the same path in the electrostatic lens system, which is necessary for precise calibration of the intensity.

With a charged particle spectrometer according to the first aspect of the invention it is possible to calibrate an energy spectrum recorded with the multichannel particle detector by measuring the intensity of the charged particles as a function of their energy, i.e., the energy spectrum, with the multichannel particle detector as well as with the calibration particle detector. By the calibration particle detector being arranged at the second end along the detection line it is possible to change the position of the charged particles at the second end by changing the voltage to the deflection analyser. This enables measurement of the energy spectrum of the charged particles with the calibration particle detector by successive changes of the positions of the charged particles at the second end.

The position of the charged particles at the second end is also dependent on the magnitude of electrostatic fields applied to the electrostatic lens system, because the kinetic energy of the charged particle at the first end is dependent on the magnitude of electrostatic field applied to the electrostatic lens system. Thus, the position of the charged particles may be changed by changing the magnitude of an electrostatic field applied to the deflection analyser and/or the magnitude of electrostatic fields applied to the electrostatic lens system.

The calibration particle detector is arranged at the second end along the detection line. Preferably, both the calibration particle detector and the multichannel particle detector are centred on the detection line.

The deflection analyser may be a hemispherical deflection analyser. Such deflection analysers are widely spread in the technical field of charged particle analysers and their function has been analysed in detail. With a hemispherical deflection analyser the detection line is arranged in the radial direction of the hemispherical deflection analyser.

It is possible to use other types of deflection analysers, such as, e.g., a parallel plate analyser or a cylindrical deflection analyser.

The multichannel particle detector may comprise multiple detection channels arranged in columns and rows. By having the multiple detection channels arranged in columns and rows the processing of the information from the detection channels to the intensities as a function of the energy of the charged particles, is facilitated. With the columns being aligned with the detection line the rows are perpendicular to the detection line. When recording an energy spectrum with the multichannel particle detector channels in the same row are integrated along the selected width of the multichannel particle detector to obtain an energy spectrum.

The multichannel particle detector may be an MCP/camera detector, which is the combination of a microchannel plate (MCP), a fluorescent screen, and a digital camera. An MCP/camera detector is a favourable choice for the multichannel particle detector as it enables a fast acquisition of an energy spectrum. The energy spectrum to be calibrated may be an energy and momentum spectrum. An MCP/camera detector may be used in a fixed mode and a swept mode as is known to persons skilled in the art. In the swept mode detector channel inhomogeneity is averaged out but the recording time is longer.

The calibration particle detector may be a channel electron multiplier, CEM, detector. This is a favourable type of detector as it has a better count rate linearity than the preferred MCP/camera detector.

According to a second aspect of the present invention a method for calibration of a multichannel particle detector in a charged particle spectrometer is provided. The charged particle spectrometer comprises a deflection analyser having a first end with an entrance for charged particles, and a second end, and an electrostatic lens system, which is arranged to transport charged particles from a sample to the entrance of the deflection analyser, wherein the position of the charged particles at the second end is dependent on the kinetic energy of the charged particle at the first end and the magnitude of an electrostatic field applied to the deflection analyser. The multichannel particle detector is arranged at the second end of the deflection analyser, has a plurality of detection channels arranged along a detection line, such that charged particles of different energies is incident on different ones of the plurality of detection channels during operation of the charged particle spectrometer. The method is characterized in that the method comprises the steps of a) providing a calibration particle detector at the second end along the detection line, wherein the count rate linearity of the calibration particle detector is better than the count rate linearity of the multichannel particle detector, b) obtaining with the multichannel particle detector, during operation of the charged particle spectrometer, the intensity as a function of the energy of the charged particles incident on the plurality of detection channels. The method is also characterized in that the method comprises c) obtaining with the calibration particle detector, during operation of the charged particle spectrometer the intensity as a function of the energy of the charged particles incident on the calibration particle detector, and d) performing a calibration of the intensities obtained with the multichannel particle detector using the intensities obtained with the calibration particle detector.

Step b) of obtaining with the multichannel particle detector, during operation of the charged particle spectrometer, the intensity as a function of the energy, i.e., the energy spectrum, of the charged particles incident on the plurality of detection channels may be performed in different ways. The charged particle spectrometer may be operated in a fixed mode in which the magnitude of the electrostatic fields applied to the deflection analyser and to the electron lens is fixed. Alternatively, the charged particle spectrometer may be operated in a swept mode in which the magnitude of the electrostatic field applied to the deflection analyser is changed during the measurement.

In step b) and c) of obtaining with the multichannel particle detector and with the calibration particle detector, during operation of the charged particle spectrometer, the intensity as a function of the energy, i.e., the energy spectrum, of the charged particles incident on the plurality of detection channels, the same portions of the particle beams arrive at the entrance at the first end of the deflection analyser because the particle beam travel through the same path in the electrostatic lens system, which is necessary for precise calibration of the intensity.

With the method according to the second aspect of the invention it is possible to calibrate an energy spectrum recorded with the multichannel particle detector by measuring the energy spectrum with the multichannel particle detector as well as with the calibration particle detector. The energy spectrum to be calibrated may be an energy and momentum spectrum. By the calibration particle detector being arranged at the second end along the detection line it is possible to change the position of the charged particles at the second end by changing the voltage to the deflection analyser and the electron lens. This enables measurement of the energy spectrum of the charged particles with the calibration particle detector by successive changes of the positions of the charged particles at the second end and addition of the intensities of the charged particles at the calibration particle detector for each position.

The position of the charged particles at the second end is also dependent on the magnitude of electrostatic fields applied to the electrostatic lens system. Thus, the position of the charged particles may be changed by changing the magnitude of an electrostatic field applied to the deflection analyser and/or the magnitude of electrostatic fields applied to the electrostatic lens system.

The intensity as a function of the energy of the charged particles incident on the calibration particle detector, may be obtained by measuring the intensity of the charged particles incident on the calibration particle detector, for different magnitudes of the electrostatic field applied to the deflection analyser and/or the electrostatic fields applied to the electron lens. By applying different magnitudes of the electrostatic field to the deflection analyser and/or the electrostatic fields applied to the electron lens it is possible to move the charged particles in the energy direction, such that charged particles of different energy ranges are incident on the calibration particle detector. The mean intensity within the energy range is measured. The energy range of the particles incident on the calibration particle detector depends on many factors, but is dependent on the width of the calibration particle detector in the energy direction. The charged particles are moved over the calibration particle detector in steps corresponding to the energy step of the energy spectrum measured with the multichannel particle detector. The energy range of the particles incident on the calibration particle detector may be different than the energy range of a detection channel in the multichannel particle detector.

Thus, the calibration comprises the steps of creating a first energy spectrum with the multichannel particle detector, creating a second energy spectrum with the calibration particle detector, and comparing the first energy spectrum with the second energy spectrum. If both detectors are linear in intensity response, the relationships between the intensities of the peaks of the first spectrum should be the same as the relationships between the intensities of the corresponding peaks of the second spectrum. With knowledge of the fact that the count rate linearity of the calibration particle detector is better than the count rate linearity of the multichannel particle detector one may assume that the intensity value obtained with the calibration particle detector is correct and adjust the intensities recorded with the multichannel particle detector accordingly.

The multichannel particle detector may comprise multiple detection channels arranged in columns and rows, wherein the rows are essentially perpendicular to the detection line and wherein the intensity as a function of the energy of the charged particles incident on the multichannel particle detector, i.e., a first energy spectrum, is obtained by integrating, for a number of different rows, the intensities from a predetermined number of channels from the same row. In this way an intensity value is obtained for each row. By moving the position of the charged particles at the second end with the size of one energy step of the first energy spectrum at a time, a second spectrum may be recorded with the calibration particle detector. As mentioned above, more charged particles within an energy range of more than one row of detection channels may be incident on the calibration particle detector at the same time. In other words the integration window of the calibration particle detector is larger than the integration window of the multichannel particle detector.

The intensities obtained with the multichannel particle detector may be integrated within a first predetermined energy range, for a number of different intensities of the charged particles at the entrance, wherein the intensities obtained with the calibration particle detector are integrated within a second predetermined energy range for said intensities of the charged particles at the entrance, and wherein the integrated intensities obtained with the multichannel particle detector are calibrated using the integrated intensities obtained with the calibration particle detector. When performing the calibration in this way the first energy spectrum should be substantially flat within the range of integration.

The first predetermined energy range and the second predetermined energy range may be the same. As the size of entrance of the calibration particle detector is normally smaller than the energy range of integration of the multichannel particle detector the first predetermined energy range is usually chosen to be larger than the second predetermined energy range.

In the following preferred embodiments of the invention will be described with reference to the drawings.

### BRIEF DESCRIPTION OF THE DRAWINGS

Figure 1 shows schematically a charged particle spectrometer with a deflection analyser.
Figure 2 shows the cross-section A-A of the deflection analyser in Figure 1 and the positions of the multichannel particle detector and the calibration particle detector.
Figure 3 shows in an enlargement of the multichannel particle detector and the calibration particle detector in Figure 2.
Figure 4 illustrates the count rate linearity/nonlinearity of the multichannel particle detector and the calibration particle detector.
Figure 5 illustrates the intensity as a function of relative energy, before and after correction of a spectrum recorded with a multichannel particle detector.
Figure 6 illustrates the intensity as a function of relative energy measured by the multichannel particle detector and the calibration particle detector.
Figure 7 shows the intensity measured by the multichannel particle detector as a function of the intensity measured by the calibration particle detector.

### DETAILED DESCRIPTION

The invention is described in the following illustrative and non-limiting detailed description of exemplary embodiments, with reference to the appended drawings. In the drawings, similar features in different drawings are denoted by the same reference numerals. The drawings are not drawn to scale.

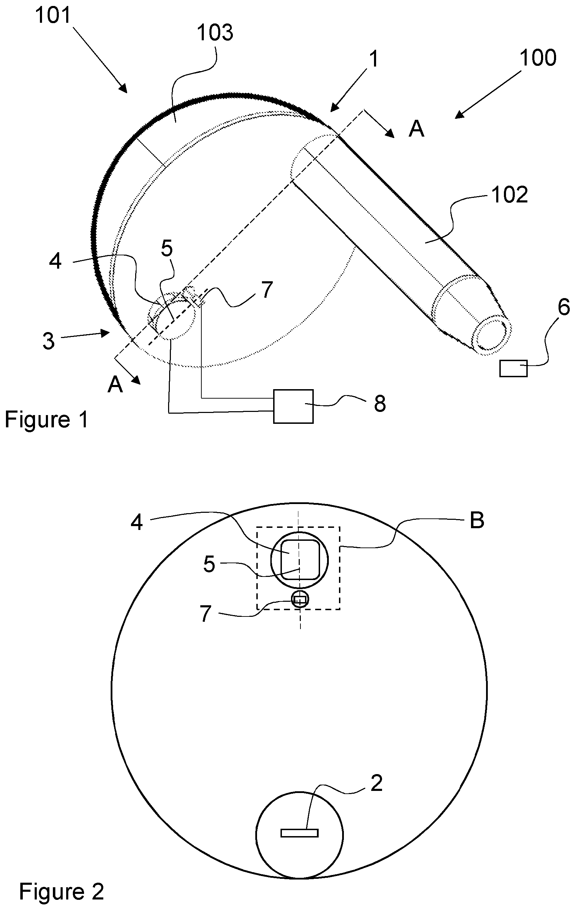

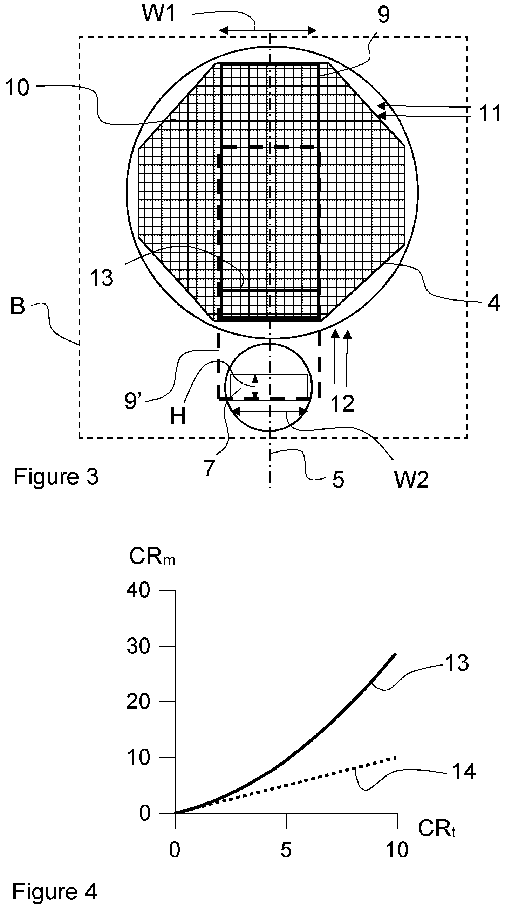

Figure 1 shows schematically a charged particle spectrometer 100 comprising a deflection analyser 101 having a first end 1 and a second end 3. Figure 2 shows the cross-section A-A of the deflection analyser in Figure 1. An entrance 2, in the form of a slit, for charged particles is arranged at the first end 1. The deflection analyser 101 is a hemispherical deflection analyser 101 comprising two concentric metallic hemispheres of which only the outer metallic hemisphere 103 is shown. In a hemispherical deflection analyser, the first end 1 and the second end 3 are in the same plane. The charged particle spectrometer 100 comprises an electrostatic lens system 102, which is arranged to transport charged particles from a sample 6 to the entrance 2 of the deflection analyser 101. The emission of charged particles from the sample 6 may be achieved by illuminating the sample with electromagnetic radiation. The charged particles enter the hemispherical deflection analyser 101 through the entrance 2. The position of the charged particles at the second end 3 is dependent on the kinetic energy of the charged particle at the first end 1 and the magnitude of an electrostatic field applied to the hemispherical deflection analyser 101, i.e., between the two metallic hemispheres of which only the outer metallic hemisphere 103 is shown. Hemispherical deflection analysers and their function are well known to persons skilled in the art and will not be explained in more detail here. A multichannel particle detector 4 is arranged at the second end 3 of the deflection analyser 101, wherein the multichannel particle detector 4 has multiple detection channels (Figure 3) arranged along a detection line 5, such that charged particles of different energies are incident on different ones of the plurality of detection channels during operation of the charged particle spectrometer. This is achieved by arranging the detection line 5 in the radial direction of the hemispherical deflection analyser. The multichannel particle detector 4 is configured to output at least one signal with information on the intensity as a function of the energy of the charged particles incident on the multichannel particle detector 4. The charged particle spectrometer 100 comprises a calibration particle detector 7 which is arranged at the second end 3 along the detection line 5, wherein the calibration particle detector 7 is configured to output the intensities of the charged particles incident on the calibration particle detector 7. A control device 8 is connected to the multichannel particle detector 4 and the calibration particle detector 7. The control device 8 also controls the voltage applied to the hemispherical deflection analyser 101. The part of the hemispherical deflection analyser 101 within the square B in Figure 2 is shown enlarged in Figure 3.

Figure 3 shows an enlargement of the multichannel particle detector 4 and the calibration particle detector 7 within the square B of Figure 2. The multichannel particle detector 4 is in this example an MCP/camera detector. The method of calibration will now be described when the charged particle spectrometer 100 is operated in the transmission mode. The positions of the charged particles incident on the multichannel particle detector 4 and the calibration particle detector are illustrated by the rectangles 9, 9'. Different positions in the energy direction, i.e., different rows, are due to different energies of the charged particles from the sample 6. In the transmission mode different position in the direction perpendicular to the energy direction, i.e., different columns, are due to different positions on the sample. The multichannel particle detector 4 comprises a plurality of detection channels 10, arranged in rows 11 and columns 12 centred on the detection line 5. The first rectangle 9 with the solid line illustrates where the majority of the charged particles hit the multichannel particle detector 4 for a first setting of the voltage to the hemispherical deflection analyser 101. The majority of the charged particles hit the channels 10 close to the detection line 5. By integrating the signal from all channels in a row 11 within the first square 9, the signal for a specific energy can be calculated. In this way a first spectrum may be obtained. The size of the first square 9 is chosen based on many factors such as measurement setting, including the lens mode, the spot size of the light source, and the sample position. The signal strength for a specific energy is affected mostly by the channels 10 within the first square 9. The explanation above is primarily directed to when the charged particle spectrometer 100 is operated in the transmission mode. However, the method would be similar when the charged particle spectrometer 100 is operated in the angular mode.

By changing the voltage to the hemispherical deflection analyser 101 and/or the voltages to the electrostatic lens system 102, the position of the charged particles at the second end 3 may be changed. The second square 9' illustrates the positions of the charged particles with a second setting of the voltage to the hemispherical deflection analyser 101. As can be seen in Figure 3 a part of the second square is positioned over the calibration particle detector 7. The part of the second square 9' over the calibration particle detector 7 corresponds to the bottom part 13 of the first square 9. By continuing to change the voltage to the hemispherical deflection analyser 101 and/or the electrostatic lens system 102, all parts of the first square 9 along the detection line 5 may be positioned over the calibration particle detector 7. Thus, it is possible to measure a second energy spectrum of the charged particles 9' by moving the different parts of the charged particles to be incident on the calibration particle detector 7. By moving the position of the charged particles corresponding to the energy steps of the first spectrum, at a time the second spectrum may be recorded with the same energy steps as the first spectrum. As can be seen in Figure 3 the width W1 of the first square 9 and the second square 9', is larger than the width W2 of the calibration particle detector 7. This does not affect the calibration as long as the true shape of the energy spectrum is independent of the width W1.

The calibration particle detector 7 is preferably a channel electron multiplier, CEM, detector as such detectors have a count rate linearity better than the count rate linearity of MCP/camera detectors.

Figure 4 illustrates the count rate linearity/nonlinearity of the multichannel particle detector 4 and the calibration particle detector. The multichannel particle detector 4 is an MCP/camera detector and the calibration particle detector 7 is a CEM detector. In Figure 4 the measured count rate, CRₘ, in counts per second is shown as a function of the true count rate, CRt, in counts per second. The solid line 13 shows an example of the count rate linearity for the MCP/camera detector in an analogue counting mode and the dashed line 14 shows the count rate linearity of the channel electron multiplier.

The intensities of the energy spectrum, or energy and momentum spectrum, obtained with the MCP/camera detector is calibrated using the information on the intensity obtained with the CEM detector.

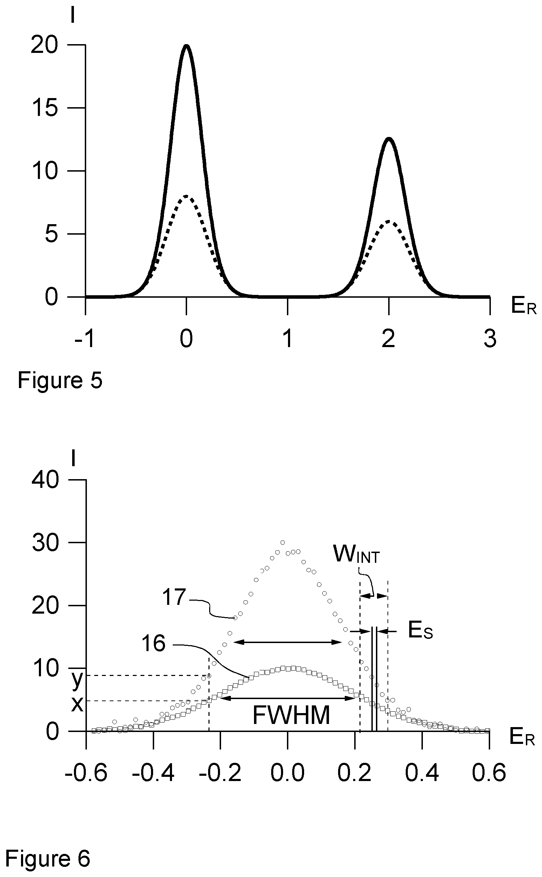

The calibration is performed by the control device 8 connected to the multichannel particle detector and to the calibration particle detector 7. Figure 5 illustrates the intensity, I, as a function of relative energy, E_{R}, in electron volts before and after correction of a spectrum recorded with a multichannel particle detector in an analogue counting mode, assuming that the multichannel particle detector has non-linearity shown in the solid line 13. As can be seen In Figure 5 the intensity is considerably lower at the peak of the corrected intensity curve, shown as the dotted line, than in the original intensity curve before correction, shown as the solid line. Also, the intensity curve before calibration is sharper than the corrected intensity curve, which leads to a misunderstanding of the spectrum.

It is possible to perform the calibration in an alternative way by claim 9. The method according to claim 6 or 7, wherein are integrating the intensities obtained with the multichannel particle detector 4 within a predetermined energy range, for a number of different intensities of the charged particles at the entrance 2 of the deflection analyser 101, wherein the intensities obtained with the calibration particle detector 7 are integrated within the same energy range for said intensities of the charged particles at the entrance 2 of the deflection analyser 101, and wherein the integrated intensities obtained with the multichannel particle detector 4 are calibrated using the integrated intensities obtained with the calibration particle detector 7. In order to get a reliable result with this method of calibration the first energy spectrum should be substantially flat within the range of integration.

Figure 6 illustrates the intensity, I, as a function of relative energy E_{R}, in eV, measured by the multichannel particle detector and the calibration particle detector. The full width half maximum, FWHM, of the peaks measured with the multichannel particle detector and the calibration particle detector is shown in Figure 6. As can be seen in Figure 6 the FWHM of the spectrum 16 measured with the calibration particle detector 7 is different from the FWHM of the spectrum 17 measured with the multichannel particle detector 4. This is due to the nonlinearity of the multichannel particle detector 4. In Figure 6 is also shown the energy step, E_{S}, which is chosen to be the same for the multichannel particle detector 4 and the calibration particle detector 7. The integration window, W_{INT}, of the calibration particle detector 7 is also shown in Figure 6 and corresponds to the energy interval within the height H of the entrance of the calibration particle detector 7 as is shown in Figure 3. If the integration window is chosen to be much smaller than FWHM, the true spectra is regarded as the same for the multichannel particle detector 4 and the calibration particle detector 7.

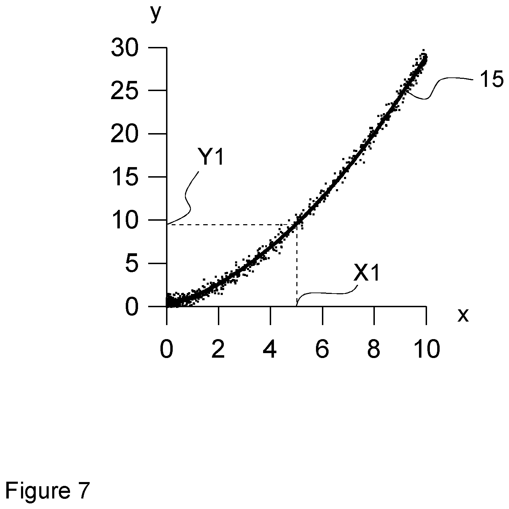

Figure 7 shows the intensity y measured by the multichannel particle detector as a function of the intensity x measured by the calibration particle detector 7. The intensities at each energy step in the energy spectra are plotted as dots. There are more points in Figure 7 than in Figure 6, because the energy steps are smaller in Figure 7. A solid line 15 has been fitted to the dots. Due to the non-linearity of the multichannel particle detector 4 the solid line is not straight. By using the solid line calibration of the multichannel particle detector may be performed. This is illustrated with the points X1 and Y1. Y1 is the intensity measured with the multichannel particle detector 4. X1 is the corresponding intensity measured with the calibration particle detector 7. A simple method for calibration may be performed by replacing each intensity Y1 of a spectrum obtained with the multichannel particle detector 4 with the corresponding intensity X1 measured with the calibration particle detector 7 using the dependency as illustrated with the solid line 15. The shape of a recorded spectrum will get the correct shape using this calibration method even if the absolute intensities will not be correct.

A calibration curve like the solid line 15 may be obtained in an alternative way using the integrated intensity measured by the multichannel particle detector 4 and the intensity measured by the calibration particle detector 7. In this case, the intensity y is obtained by integrating the intensities of the first energy spectrum measured with the multichannel particle detector 4 within a first predetermined energy range. The intensity x is obtained with the calibration particle detector 7, and the energy integration range is determined by the height of the entrance H of the calibration particle detector. A calibration curve like the solid line 15 may be obtained by changing the total intensity of the charged particle by changing the intensity of electromagnetic radiation to the sample 6. In order to get a reliable result with this method of calibration the first energy spectrum should be substantially flat within the range of integration. The energy range of integration of intensities obtained with the multichannel particle detector 4 may be different from the energy range of integration of intensities obtained with the calibration particle detector 7, but they should be the same throughout the measurement.

The above described embodiments may be altered in many ways without departing from the scope of the invention which is limited only by means of the appended claims and their limitations.

## Claims

1. A charged particle spectrometer (100) comprising:
- a hemispherical deflection analyser (101) having a first end (1) with an entrance (2) for charged particles, and a second end (3), wherein the position of the charged particles at the second end (3) is dependent on the kinetic energy of the charged particle at the first end (1) and the magnitude of an electrostatic field applied to the hemispherical deflection analyser (101),
- an electrostatic lens system (102), which is arranged to transport charged particles from a sample (6) along a path to the entrance (2) of the deflection analyser (101), and
- a multichannel particle detector (4) arranged at the second end (3) of the hemispherical deflection analyser (101), wherein the multichannel particle detector (4) has multiple detection channels arranged along a detection line (5), such that charged particles of different energies are incident on different ones of the plurality of detection channels during operation of the charged particle spectrometer, wherein the multichannel particle detector (4) is configured to output the intensities of the charged particles transported from the sample (6) through the path in the electrostatic lens system (102), the entrance (2), the heispherical deflection analyser (101), and incident on the different detection channels,
**characterized in that** it comprises a calibration particle detector (7) which is arranged at the second end (3) along the detection line (5), wherein the detection line (5) is in the radial direction of the hemispherical deflection analyser (101), wherein the calibration particle detector (7) is configured to output the intensity of the charged particles transported from the sample (6) through the path in the electrostatic lens system (102), the entrance (2), the deflection analyser (101), and incident on the calibration particle detector (7), and wherein the count rate linearity of calibration particle detector (7) is better than the count rate linearity of the particle detector (4).

2. The charged particle spectrometer according to claim 1, wherein the deflection analyser (101) is a hemispherical deflection analyser, and wherein the detection line (5) is in the radial direction of the hemispherical deflection analyser.

3. The charged particle spectrometer (100) according to claim 1 or 2, wherein the multichannel particle detector (4) comprises multiple detection channels arranged in columns and rows.

4. The charged particle spectrometer (100) according to claim 3, wherein the multichannel particle detector (4) is an MCP/camera detector.

5. The charged particle spectrometer (100) according to any one of the preceding claims, wherein the calibration particle detector is a channel electron multiplier, CEM, detector.

6. A method for calibration of a multichannel particle detector (4) in a charged particle spectrometer (100) comprising a hemispherical deflection analyser (101) comprising a first end (1) with an entrance (2) for charged particles, and a second end (3), and an electrostatic lens system (102), which is arranged to transport charged particles from a sample (6) to the entrance (2) of the hemispherical deflection analyser (101) along a path,
wherein the position of the charged particles at the second end (3) is dependent on the kinetic energy of the charged particle at the first end (1) and the magnitude of an electrostatic field applied to the hemispherical deflection analyser (101), and
wherein the multichannel particle detector (4) is arranged at the second end (3) of the hemispherical deflection analyser (101), has a plurality of detection channels arranged along a detection line (5), such that charged particles of different energies is incident on different ones of the plurality of detection channels during operation of the charged particle spectrometer, **characterized in that** the method comprises the steps of:
- a) providing a calibration particle detector (7) at the second end (3) along the detection line (5), wherein the detection line (5) is in the radial direction of the hemispherical deflection analyser (101), and wherein the count rate linearity of the calibration particle detector (7) is better than the count rate linearity of the multichannel particle detector (4),
- b) obtaining with the multichannel particle detector (4), during operation of the charged particle spectrometer (100), the intensity as a function of the energy of the charged particles incident on at least some of the plurality of detection channels,
- c) obtaining with the calibration particle detector (7), during operation of the charged particle spectrometer (100), the intensity as a function of the energy of the charged particles incident on the calibration particle detector (7),
- d) performing a calibration of the intensities obtained with the multichannel particle detector (4) using the intensities obtained with the calibration particle detector (7).

7. Method according to claim 6, wherein the intensity as a function of the energy of the charged particles incident on the calibration particle detector (7), is obtained by measuring the intensity of the charged particles incident on the calibration particle detector (7), for different magnitudes of the electrostatic field applied to the hemispherical deflection analyser (101) and/or the electrostatic fields applied to the electron lens.

8. The method according to claim 6 or 7, wherein the multichannel particle detector (4) comprises multiple detection channels arranged in columns (12) and rows (11), wherein the rows are essentially perpendicular to the detection line (5) and wherein the intensity as a function of the energy of the charged particles incident on the multichannel particle detector (4) is obtained by integrating, for a number of different rows, the intensities from a predetermined number of channels from the same row (11).

9. The method according to any of claims 6-8, wherein the intensities obtained with the multichannel particle detector (4) are integrated within a first predetermined energy range, for a number of different intensities of the charged particles at the entrance (2), wherein the intensities obtained with the calibration particle detector (7) are integrated within a second predetermined energy range for said intensities of the charged particles at the entrance (2), and wherein the integrated intensities obtained with the multichannel particle detector (4) are calibrated using the integrated intensities obtained with the calibration particle detector (7).

## Patentansprüche

1. Spektrometer für geladene Teilchen (100), umfassend:
- einen halbrunden Ablenkungsanalysator (101), der ein erstes Ende (1) mit einem Eingang (2) für geladene Teilchen und ein zweites Ende (3) aufweist, wobei die Position der geladenen Teilchen an dem zweiten Ende (3) von der kinetischen Energie des geladenen Teilchens an dem ersten Ende (1) und der Größe eines elektrostatischen Feldes, das auf den halbrunden Ablenkungsanalysator (101) angewandt wird, abhängig ist,
- ein elektrostatisches Linsensystem (102), das dazu angeordnet ist, geladene Teilchen entlang eines Pfades von einem Muster (6) zu dem Eingang (2) des Ablenkungsanalysators (101) zu transportieren, und
- einen Mehrkanalteilchendetektor (4), der an dem zweiten Ende (3) des halbrunden Ablenkungsanalysators (101) angeordnet ist, wobei der Mehrkanalteilchendetektor (4) mehrere Detektionskanäle aufweist, die entlang einer Detektionslinie (5) derart angeordnet sind, dass geladene Teilchen unterschiedlicher Energien während eines Betriebs des Spektrometers für geladene Teilchen auf unterschiedliche der Vielzahl von Detektionskanälen einfallen, wobei der Mehrkanalteilchendetektor (4) dazu konfiguriert ist, die Intensitäten der geladenen Teilchen, die von dem Muster (6) über den Pfad in dem elektrostatischen Linsensystem (102), den Eingang (2), den halbrunden Ablenkungsanalysator (101) und einfallend auf die unterschiedlichen Detektionskanäle transportiert werden, auszugeben, **dadurch gekennzeichnet, dass** er einen Kalibrierungsteilchendetektor (7) umfasst, der an dem zweiten Ende (3) entlang der Detektionslinie (5) angeordnet ist, wobei die Detektionslinie (5) in der radialen Richtung des halbrunden Ablenkungsanalysators (101) verläuft, wobei der Kalibrierungsteilchendetektor (7) dazu konfiguriert ist, die Intensität der geladenen Teilchen, die von dem Muster (6) über den Pfad in dem elektrostatischen Linsensystem (102), den Eingang (2), den Ablenkungsanalysator (101) und einfallend auf den Kalibrierungsteilchendetektor (7) transportiert werden, auszugeben, und wobei die Zählratenlinearität des Kalibrierungsteilchendetektors (7) besser als die Zählratenlinearität des Teilchendetektors (4) ist.

2. Spektrometer für geladene Teilchen nach Anspruch 1, wobei der Ablenkungsanalysator (101) ein halbrunder Ablenkungsanalysator ist und wobei die Detektionslinie (5) in der radialen Richtung des halbrunden Ablenkungsanalysators verläuft.

3. Spektrometer für geladene Teilchen (100) nach Anspruch 1 oder 2, wobei der Mehrkanalteilchendetektor (4) mehrere Detektionskanäle umfasst, die in Spalten und Zeilen angeordnet sind.

4. Spektrometer für geladene Teilchen (100) nach Anspruch 3, wobei der Mehrkanalteilchendetektor (4) ein MCP-/Kameradetektor ist.

5. Spektrometer für geladene Teilchen (100) nach einem der vorhergehenden Ansprüche, wobei der Kalibrierungsteilchendetektor ein Kanalelektronenvervielfacherdetektor, CEM-Detektor, ist.

6. Verfahren zur Kalibrierung eines Mehrkanalteilchendetektors (4) in einem Spektrometer für geladene Teilchen (100), umfassend einen halbrunden Ablenkungsanalysator (101), umfassend ein erstes Ende (1) mit einem Eingang (2) für geladene Teilchen und ein zweites Ende (3), und ein elektrostatisches Linsensystem (102), das dazu angeordnet ist, geladene Teilchen entlang eines Pfades von einem Muster (6) zu dem Eingang (2) des halbrunden Ablenkungsanalysators (101) zu transportieren, wobei die Position der geladenen Teilchen an dem zweiten Ende (3) von der kinetischen Energie des geladenen Teilchens an dem ersten Ende (1) und der Größe eines elektrostatischen Feldes, das auf den halbrunden Ablenkungsanalysator (101) angewandt wird, abhängig ist und
wobei der Mehrkanalteilchendetektor (4) an dem zweiten Ende (3) des halbrunden Ablenkungsanalysators (101) angeordnet ist, eine Vielzahl von Detektionskanälen aufweist, die entlang einer Detektionslinie (5) derart angeordnet ist, dass geladene Teilchen unterschiedlicher Energien während eines Betriebs des Spektrometers für geladene Teilchen auf unterschiedliche der Vielzahl von Detektionskanälen einfallen, **dadurch gekennzeichnet, dass** das Verfahren die folgenden Schritte umfasst:
- a) Bereitstellen eines Kalibrierungsteilchendetektors (7) an dem zweiten Ende (3) entlang der Detektionslinie (5), wobei die Detektionslinie (5) in der radialen Richtung des halbrunden Ablenkungsanalysators (101) verläuft und wobei die Zählratenlinearität des Kalibrierungsteilchendetektors (7) besser als die Zählratenlinearität des Mehrkanalteilchendetektors (4) ist,
- b) Erlangen mit dem Mehrkanalteilchendetektor (4), während des Betriebs des Spektrometers für geladene Teilchen (100), der Intensität als eine Funktion der Energie der geladenen Teilchen, die auf mindestens einige der Vielzahl von Detektionskanälen einfallen,
- c) Erlangen mit dem Kalibrierungsteilchendetektor (7), während des Betriebs des Spektrometers für geladene Teilchen (100), der Intensität als eine Funktion der Energie der geladenen Teilchen, die auf den Kalibrierungsteilchendetektor (7) einfallen,
- d) Durchführen einer Kalibrierung der Intensitäten, die mit dem Mehrkanalteilchendetektor (4) erlangt werden, unter Verwendung der Intensitäten, die mit dem Kalibrierungsteilchendetektor (7) erlangt werden.

7. Verfahren nach Anspruch 6, wobei die Intensität als eine Funktion der Energie der geladenen Teilchen, die auf den Kalibrierungsteilchendetektor (7) einfallen, durch Messen der Intensität der geladenen Teilchen, die auf den Kalibrierungsteilchendetektor (7) einfallen, für unterschiedliche Größen des elektrostatischen Feldes, das auf den halbrunden Ablenkungsanalysator (101) angewandt wird, und/oder des elektrostatischen Feldes, das auf die Elektronenlinse angewandt wird, erlangt wird.

8. Verfahren nach Anspruch 6 oder 7, wobei der Mehrkanalteilchendetektor (4) mehrere Detektionskanäle umfasst, die in Spalten (12) und Zeilen (11) angeordnet sind, wobei die Zeilen im Wesentlichen senkrecht zu der Detektionslinie (5) verlaufen und wobei die Intensität als eine Funktion der Energie der geladenen Teilchen, die auf den Mehrkanalteilchendetektor (4) einfallen, durch Integrieren, für eine Anzahl an unterschiedlichen Zeilen, der Intensitäten aus einer vorbestimmten Anzahl an Kanälen aus der gleichen Zeile (11) erlangt wird.

9. Verfahren nach einem der Ansprüche 6-8, wobei die Intensitäten, die mit dem Mehrkanalteilchendetektor (4) erlangt werden, innerhalb eines ersten vorbestimmten Energiebereichs für eine Anzahl an unterschiedlichen Intensitäten der geladenen Teilchen an dem Eingang (2) integriert werden, wobei die Intensitäten, die mit dem Kalibrierungsteilchendetektor (7) erlangt werden, innerhalb eines zweiten vorbestimmten Energiebereichs für die Intensitäten der geladenen Teilchen an dem Eingang (2) integriert werden und wobei die integrierten Intensitäten, die mit dem Mehrkanalteilchendetektor (4) erlangt werden, unter Verwendung der integrierten Intensitäten, die mit dem Kalibrierungsteilchendetektor (7) erlangt werden, kalibriert werden.

## Revendications

1. Spectromètre de particules chargées (100) comprenant :
- un analyseur à déflexion hémisphérique (101) ayant une première extrémité (1) avec une entrée (2) pour des particules chargées, et une seconde extrémité (3), dans lequel la position des particules chargées au niveau de la seconde extrémité (3) dépend de l'énergie cinétique de la particule chargée au niveau de la première extrémité (1) et de l'amplitude d'un champ électrostatique appliqué à l'analyseur à déflexion hémisphérique (101),
- un système de lentilles électrostatiques (102), qui est agencé pour transporter des particules chargées à partir d'un échantillon (6) le long d'un trajet vers l'entrée (2) de l'analyseur à déflexion (101), et
- un détecteur de particules multicanal (4) agencé au niveau de la seconde extrémité (3) de l'analyseur à déflexion hémisphérique (101), dans lequel le détecteur de particules multicanal (4) possède de multiples canaux de détection agencés le long d'une ligne de détection (5), de sorte que des particules chargées d'énergies différentes sont incidentes sur différents canaux de la pluralité de canaux de détection pendant le fonctionnement du spectromètre de particules chargées, dans lequel le détecteur de particules multicanal (4) est configuré pour délivrer en sortie les intensités des particules chargées transportées à partir de l'échantillon (6) à travers le trajet dans le système de lentilles électrostatiques (102), l'entrée (2), l'analyseur à déflexion hémisphérique (101), et incidentes sur les différents canaux de détection, **caractérisé en ce qu'**il comprend un détecteur de particules d'étalonnage (7) qui est agencé au niveau de la seconde extrémité (3) le long de la ligne de détection (5), dans lequel la ligne de détection (5) est dans la direction radiale de l'analyseur à déflexion hémisphérique (101), dans lequel le détecteur de particules d'étalonnage (7) est configuré pour délivrer en sortie l'intensité des particules chargées transportées à partir de l'échantillon (6) à travers le trajet dans le système de lentilles électrostatiques (102), l'entrée (2), l'analyseur à déflexion (101), et incidentes sur le détecteur de particules d'étalonnage (7), et dans lequel la linéarité du taux de comptage du détecteur de particules d'étalonnage (7) est meilleure que la linéarité du taux de comptage du détecteur de particules (4).

2. Spectromètre de particules chargées selon la revendication 1, dans lequel l'analyseur à déflexion (101) est un analyseur à déflexion hémisphérique, et dans lequel la ligne de détection (5) est dans la direction radiale de l'analyseur à déflexion hémisphérique.

3. Spectromètre de particules chargées (100) selon la revendication 1 ou 2, dans lequel le détecteur de particules multicanal (4) comprend de multiples canaux de détection agencés en colonnes et en rangées.

4. Spectromètre de particules chargées (100) selon la revendication 3, dans lequel le détecteur de particules multicanal (4) est un détecteur MCP/caméra.

5. Spectromètre de particules chargées (100) selon l'une quelconque des revendications précédentes, dans lequel le détecteur de particules d'étalonnage est un détecteur à multiplicateur d'électrons à canal, CEM.

6. Procédé d'étalonnage d'un détecteur de particules multicanal (4) dans un spectromètre de particules chargées (100) comprenant un analyseur à déflexion hémisphérique (101) comprenant une première extrémité (1) avec une entrée (2) pour des particules chargées, et une seconde extrémité (3), et un système de lentilles électrostatiques (102), qui est agencé pour transporter des particules chargées à partir d'un échantillon (6) vers l'entrée (2) de l'analyseur à déflexion hémisphérique (101) le long d'un trajet, dans lequel la position des particules chargées au niveau de la seconde extrémité (3) dépend de l'énergie cinétique de la particule chargée au niveau de la première extrémité (1) et de l'amplitude d'un champ électrostatique appliqué à l'analyseur à déflexion hémisphérique (101), et
dans lequel le détecteur de particules multicanal (4) est agencé au niveau de la seconde extrémité (3) de l'analyseur à déflexion hémisphérique (101), possède une pluralité de canaux de détection agencés le long d'une ligne de détection (5), de sorte que des particules chargées d'énergies différentes sont incidentes sur différents canaux de la pluralité de canaux de détection pendant le fonctionnement du spectromètre de particules chargées, **caractérisé en ce que** le procédé comprend les étapes consistant à :
- a) fournir un détecteur de particules d'étalonnage (7) au niveau de la seconde extrémité (3) le long de la ligne de détection (5), dans lequel la ligne de détection (5) est dans la direction radiale de l'analyseur à déflexion hémisphérique (101), et dans lequel la linéarité du taux de comptage du détecteur de particules d'étalonnage (7) est meilleure que la linéarité du taux de comptage du détecteur de particules multicanal (4),
- b) obtenir avec le détecteur de particules multicanal (4), pendant le fonctionnement du spectromètre de particules chargées (100), l'intensité en fonction de l'énergie des particules chargées incidentes sur au moins certains de la pluralité de canaux de détection,
- c) obtenir avec le détecteur de particules d'étalonnage (7), pendant le fonctionnement du spectromètre de particules chargées (100), l'intensité en fonction de l'énergie des particules chargées incidentes sur le détecteur de particules d'étalonnage (7),
- d) réaliser un étalonnage des intensités obtenues avec le détecteur de particules multicanal (4) en utilisant les intensités obtenues avec le détecteur de particules d'étalonnage (7) .

7. Procédé selon la revendication 6, dans lequel l'intensité en fonction de l'énergie des particules chargées incidentes sur le détecteur de particules d'étalonnage (7), est obtenue en mesurant l'intensité des particules chargées incidentes sur le détecteur de particules d'étalonnage (7), pour différentes amplitudes du champ électrostatique appliqué à l'analyseur à déflexion hémisphérique (101) et/ou des champs électrostatiques appliqués à la lentille électronique.

8. Procédé selon la revendication 6 ou 7, dans lequel le détecteur de particules multicanal (4) comprend de multiples canaux de détection agencés en colonnes (12) et en rangées (11), dans lequel les rangées sont essentiellement perpendiculaires à la ligne de détection (5) et dans lequel l'intensité en fonction de l'énergie des particules chargées incidentes sur le détecteur de particules multicanal (4) est obtenue en intégrant, pour un certain nombre de rangées différentes, les intensités provenant d'un nombre prédéterminé de canaux de la même rangée (11).

9. Procédé selon l'une quelconque des revendications 6 à 8, dans lequel les intensités obtenues avec le détecteur de particules multicanal (4) sont intégrées dans une première plage d'énergie prédéterminée, pour un certain nombre d'intensités différentes des particules chargées au niveau de l'entrée (2), dans lequel les intensités obtenues avec le détecteur de particules d'étalonnage (7) sont intégrées dans une seconde plage d'énergie prédéterminée pour lesdites intensités des particules chargées au niveau de l'entrée (2), et dans lequel les intensités intégrées obtenues avec le détecteur de particules multicanal (4) sont étalonnées en utilisant les intensités intégrées obtenues avec le détecteur de particules d'étalonnage (7).
